# EUROPEAN PATENT SPECIFICATION

(11) **EP 4 018 818 B1**
(45) Date of publication and mention of the grant of the patent: **04.12.2024**
(21) Application number: 21217111.0
(22) Date of filing: 22.12.2021
(51) Int. Cl.: A01G 9/24, A01G 31/06

(54) **PLANT CULTIVATION APPARATUS**
PFLANZENZUCHTVORRICHTUNG
APPAREIL DE CULTURE DE PLANTES

(30) Priority: 22.12.2020 KR 20200181108
(43) Date of publication of application: 29.06.2022
(73) Proprietor: LG Electronics Inc., Seoul 07336 (KR)
(72) Inventor: YANG, Mina, 08592 Seoul (KR); KIM, Youngsuk, 08592 Seoul (KR)
(74) Representative: Frenkel, Matthias Alexander

(56) References cited:
- KR-B1- 101 402 782
- TW-B- I 714 474
- US-B1- 11 019 775

## Description

### BACKGROUND OF THE DISCLOSURE

### Field of the Disclosure

The present disclosure relates to a plant cultivation apparatus, and more particularly, to a plant cultivation apparatus including a nutrient feeder in which nutrient for a plant is received.
TW I 714 474 B relates to a new type water circulation irrigation system including a water supply device and a planting device. The planting device includes a water storage container, an irrigation pipeline, a sprinkler head and a recovery pipeline. One end of the irrigation pipeline is connected to the water storage container having a water supply end and the planting device includes a water collection container, a planting tray and a diverter. The water collection container has a drainage column and the planting tray is arranged in the water collection container at the opening of the planting tray and the planting tray has a set of parts with a through hole and corresponding to the water collection space of the water collection container. The diverting member includes a fertilizer tank and is set on the assembly part of the planting tray at the periphery of the through hole.

KR 101402782 B1 illustrates, for example, an alternative plant cultivation apparatus.

### Discussion of the Related Art

A plant cultivation apparatus refers to an apparatus capable of plant cultivation by artificially supplying light energy, moisture, soil, and temperature necessary for plant growth. The plant cultivation apparatus has a predetermined cultivation space defined therein having an environment suitable for plant growth, and cultivates and stores the plant in the predetermined cultivation space.

Further, the plant cultivation apparatus may include components for supplying moisture and nutrients necessary for plant growth. Further, the plant cultivation apparatus may include a component for artificially supplying light energy. Thus, the plant cultivated in the plant cultivation apparatus may be artificially supplied with light energy from the plant cultivation apparatus while not receiving light irradiated from the sun outside the plant cultivation apparatus.

Accordingly, a user may not periodically supply moisture or nutrient in a cultivation operation process of the plant. The plant cultivated in the plant cultivation apparatus grows upon receiving the nutrient, moisture and light energy supplied from the plant cultivation apparatus.

A water-based cultivation scheme as one of schemes for cultivating a plant refers to a scheme for cultivating a plant by supplying to the plant a cultivation medium in which inorganic nutrients necessary for growth are dissolved in water, instead of using soil. The water-based cultivation scheme is more hygienic than the soil-based cultivation scheme using soil is, and is less affected by weather and season. Thus, the water-based cultivation scheme may create a more favorable growth condition than the soil-based cultivation scheme may.

Further, a hydroponic water-based cultivation scheme as one of the water-based cultivation schemes refers to a cultivation scheme in which the plant is cultivated so that the roots thereof are received in nutrient liquid and a stem and leaves of the plant are grown in a space above the nutrient liquid.

In this hydroponic water-based cultivation scheme, the nutrient liquid containing nutrients therein is stored in a storage tank, and the nutrient liquid is supplied to a pod where the plant is cultivated, so that the plant is grown while the plant's roots are received in the nutrient liquid.

However, a required nutrient amount increases according to a growth period of the plant, and a required nutrient amount varies based on a plant type.

In particular, for special plants among plant types, a nutrient concentration should be controlled based on growth periods. For plants such as fruits and vegetables, the nutrient concentration should be controlled such that a growth state changes from vegetative growth to reproductive growth. Thus, it causes inconvenience for the user to additionally control the nutrient concentration based on plant types to be cultivated and based on growth stages.

Therefore, it is an important task in the present technical field to design a structure that additionally supplies the nutrients based on the type of the plant and the growth stages using water supplied from the storage tank to the pod.

### SUMMARY OF THE DISCLOSURE

The invention is achieved with the appended claims.

Embodiments of the present disclosure are to provide a plant cultivation apparatus that may additionally supply nutrients based on a type of a plant or growth stages.

Further, embodiments of the present disclosure are to provide a plant cultivation apparatus having a cultivator including a nutrient feeder in which nutrient for the plant is received, thereby improving convenience of a user.

Further, embodiments of the present disclosure are to provide a plant cultivation apparatus in which a water supply for supplying water to a cultivator supplies water to a nutrient feeder in which nutrient for the plant is received such that the nutrient is fed thereto.

Further, embodiments of the present disclosure are to provide a plant cultivation apparatus in which a vertical level of a water surface inside a cultivator may vary to supply water to a nutrient feeder such that the nutrient for the plant is supplied to a cultivation medium.

Further, embodiments of the present disclosure are to provide a plant cultivation apparatus that may have an additional supply channel for supplying water to a nutrient feeder, wherein the additional supply channel may supply water to the nutrient feeder such that the nutrient for the plant is fed to the plant.

In order to achieve the purposes, embodiments of the present disclosure provide a plant cultivation apparatus including a cultivator and a nutrient feeder disposed in a cultivator to receive therein the nutrient for the plant.

Specifically, a plant cultivation apparatus according to an embodiment of the present disclosure includes a cabinet, a bed, a cultivator, and a water supply. The bed is disposed inside the cabinet. The cultivator is seated on the bed and is constructed to receive therein a cultivation medium containing therein at least a portion of the plant. The water supply is disposed inside the cabinet and is configured to supply water to the cultivator.

Further, the cultivator includes a cultivation vessel and a nutrient feeder. the cultivation vessel is seated on the bed, and has a cultivation medium receiving space defined therein in which the cultivation medium is received. The nutrient feeder is disposed in the cultivation medium receiving space, and the nutrient for the plant is received in the nutrient feeder.

Further, the cultivation vessel may be constructed such that water supplied from the water supply is stored in the cultivation medium receiving space and is then provided to the cultivation medium, and the nutrient feeder may be spaced apart from a bottom surface of the cultivation vessel.

Further, the nutrient feeder may be constructed such that when the nutrient feeder comes into contact with the water stored in the cultivation medium receiving space, the nutrient therein is mixed with the water to produce a mixed solution which in turn is provided to the cultivation medium.

In the plant cultivation apparatus according to one embodiment of the present disclosure, the cultivation vessel may have a first communication hole defined therein for receiving water from the water supply. The water supply may include a first water supply channel disposed in the bed for supplying water to the cultivation medium receiving space through the first communication hole.

Further, the nutrient feeder may have a nutrient feeding hole defined therein communicating with the cultivation medium receiving space. The plant cultivation apparatus according to an embodiment of the present disclosure may be configured such that when the water stored in the cultivation medium receiving space flows into the nutrient feeder, a mixed solution of the nutrient and the water is discharged through the nutrient feeding hole.

The cultivation vessel has an open top so that the cultivation medium receiving space is exposed outwardly through the open top. The cultivator further includes a cover and a cover channel.

Further, the cover is disposed on the open top of the cultivation vessel to block the cultivation medium receiving space. The cover channel is defined in a top face of the cover and receive the water supplied from the water supply.

Further, the cover channel has a first inflow hole communicating with the inside of the nutrient feeder, wherein water is supplied to the nutrient feeder through the first inflow hole.

Further, the cover channel may be defined by recessing a portion of the top face of the cover, wherein the cover includes a cultivation medium receiving portion receiving an upper end of the cultivation medium in the cultivation medium receiving space, wherein the cultivation medium receiving portion is disposed in the cover channel and protrudes upwards from a bottom surface of the cover channel.

Further, the first inflow hole may be defined so as to be in contact with the bottom surface of the cover channel. Water received in the cover channel may flow into the nutrient feeder through the first inflow hole.

Further, the nutrient feeder may be configured to protrude upward from the bottom surface of the cover channel and be spaced apart from the cultivation medium receiving portion. The plurality of first inflow holes may be arranged along the circumference of the nutrient feeder. That is, the first inflow holes are arranged around the nutrient feeder.

The nutrient feeder has a nutrient feeding hole defined therein in communication with the cultivation medium receiving space, wherein the nutrient feeder has a side face extending from the cover toward the bottom surface of the cultivation vessel, and a bottom portion connected to the side face, wherein the nutrient feeding hole defined in the bottom portion.

Further, the first inflow hole extends through the side face and communicates with the inside of the nutrient feeder.

Further, the water supply further includes a second water supply channel at least partially located above the cover channel to supply water to the cover channel, wherein water supplied from the second water supply channel to the cover channel flows through the first inflow hole and into the nutrient feeder.

The apparatus further comprises a controller disposed in the cabinet and configured to control the water supply.

In a general mode, the controller is configured to control the water supply to supply water to the cultivation medium receiving space through the first water supply channel such that a vertical level of a water-surface in the cultivation medium receiving space is lower than a vertical level of the nutrient feeding, thereby preventing inflow of water into the nutrient feeder.

Further, in an additional water supply mode, the controller is configured to control the water supply to supply water to the cultivation medium receiving space through the first water supply channel such that a vertical level of the water-surface in the cultivation medium receiving space is higher than or equal to the vertical level of the feeding hole such that the nutrient of the nutrient feeder is mixed with the water to produce the mixed solution to be fed to the medium.

Further, the water supply is configured to supply water to the cultivator selectively through one of the first water supply channel and the second water supply channel.

Further, in the general mode, the controller is configured to control the water supply to block the second water supply channel and to supply water to the cultivation medium receiving space through the first water supply channel.

Further, in an upper water supply mode, the controller is configured to control the water supply to block the first water supply channel and to supply water to the cover channel through the second water supply channel.

Further, in the upper water supply mode, the controller is configured to control the water supply such that water is supplied from the cover channel to the nutrient feeder, and thus a mixture of water and the nutrient from the nutrient feeder is supplied to the cultivation medium.

The features of the above-described embodiments may be implemented in combination with those of other embodiments unless contradictory or exclusive to those of the other embodiments.

Embodiments of the present disclosure may realize a plant cultivation apparatus that may additionally supply nutrients based on a type of a plant or growth stages.

Further, embodiments of the present disclosure may realize a plant cultivation apparatus having a cultivator including a nutrient feeder in which nutrient for the plant is received, thereby improving convenience of a user.

Further, embodiments of the present disclosure may realize a plant cultivation apparatus in which a water supply for supplying water to a cultivator supplies water to a nutrient feeder in which nutrient for the plant is received such that the nutrient is fed thereto.

Further, embodiments of the present disclosure may realize a plant cultivation apparatus in which a vertical level of a water surface inside a cultivator may vary to supply water to a nutrient feeder such that the nutrient for the plant is supplied to a cultivation medium.

Further, embodiments of the present disclosure may realize a plant cultivation apparatus that may have an additional supply channel for supplying water to a nutrient feeder, wherein the additional supply channel may supply water to the nutrient feeder such that the nutrient for the plant is fed to the plant.

Effects of the embodiments of the present disclosure are not limited to those as described above, and other effects as not mentioned above may be clearly recognized by those skilled in the art based on following descriptions.

### BRIEF DESCRIPTION OF THE DRAWINGS

FIG. 1 is a perspective view of the plant cultivation apparatus according to one embodiment of the present disclosure.
FIG. 2 is a perspective view of a state in which a door is opened in a plant cultivation apparatus according to one embodiment of the present disclosure.
FIG. 3 is a perspective view showing a state in which a cultivator according to an embodiment is seated on a bed in a plant cultivation apparatus according to an embodiment of the present disclosure.
FIG. 4 is a perspective view and an exploded view showing several embodiments of a cultivator in a plant cultivation apparatus according to one embodiment of the present disclosure.
FIG. 5 is a side view showing an embodiment of a cultivator including a nutrient feeder in a plant cultivation apparatus according to an embodiment of the present disclosure.
FIG. 6 is a perspective view showing a state in which a cultivator according to another embodiment is seated on a bed in a plant cultivation apparatus according to one embodiment of the present disclosure.
FIG. 7 is an exploded view showing another embodiment of a cultivator in a plant cultivation apparatus according to one embodiment of the present disclosure.
FIG. 8 is a perspective view showing a cultivator in a plant cultivation apparatus according to one embodiment of the present disclosure.
FIG. 9 is a top view and a side view showing a cultivator in a plant cultivation apparatus according to an embodiment of the present disclosure.
FIG. 10 is a view showing a water supply process of several embodiments in a plant cultivation apparatus according to one embodiment of the present disclosure.
FIG. 11 is a diagram showing a control mode performed by a controller in a plant cultivation apparatus according to an embodiment of the present disclosure.

### DESCRIPTION OF SPECIFIC EMBODIMENTS

Hereinafter, embodiments of the present disclosure will be described in detail with reference to the accompanying drawings. The same reference numbers may be allocated to the same or similar components. Redundant descriptions thereof will be omitted. As used herein, a suffix "module" or "unit" as used for a component are intended only for ease of describing the present disclosure, and the suffix "module" or "unit" itself does not have a specific meaning or role. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the scope of the present disclosure as defined by the appended claims

The terminology used herein is for the purpose of describing particular embodiments only and is not intended to limit the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entirety of list of elements and may not modify the individual elements of the list. When referring to "C to D", this means C inclusive to D inclusive unless otherwise specified.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

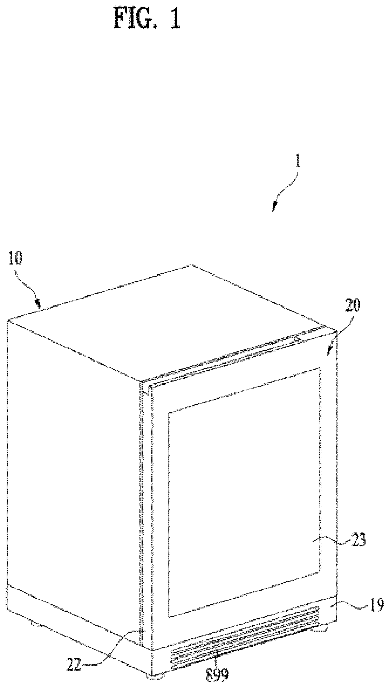

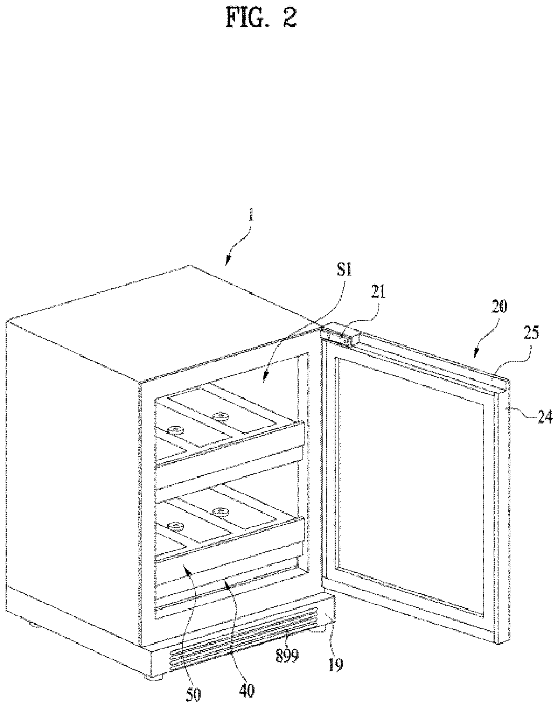

FIG. 1 is a perspective view of a plant cultivation apparatus 1 according to one embodiment of the present disclosure. FIG. 2 is a perspective view of a state in which a door 20 is opened in the plant cultivation apparatus 1 according to one embodiment of the present disclosure.

As shown in FIG. 1 and FIG. 2, the plant cultivation apparatus 1 according to one embodiment of the present disclosure includes a cabinet 10 having a cultivation space S1 defined therein in which a plant is cultivated, and the door 20 for opening and closing the cabinet 10. An outer appearance of the apparatus 1 may be defined by the cabinet 10 and the door 20. The plant cultivated in the cultivation space S1 may be of a type of a plant that may be eaten by a user, may be easily cultivated, and may not occupy a lot of space, such as leafy vegetables and herbs.

The cabinet 10 may have one open face having an opening defined therein. The cultivation space S1 may be defined in the cabinet 10. The cabinet 10 may have a rectangular parallelepiped shape as shown in the drawing, but is not necessarily limited thereto. The cabinet 10 may be formed in various forms such as a cylinder and a sphere as long as the cultivation space S1 may be defined therein. Further, as shown in FIG. 1 and FIG. 2, the door 20 may be sized to shield the opening of the cabinet 10. Hereinafter, for convenience of descriptions, the open face defines a front face of the cabinet 10. However, the disclosure is limited thereto.

The door 20 may have a door panel 23 which is at least partially transparent. The door panel 23 may be made of a glass or a transparent plastic material such that the user may see through the panel 23 into an inside of the cabinet.

Due to this structure, the user may visually identify the inside of the cultivation space S1 even when the door 20 is closed, so that a growth state of the plant may be identified by the user. Further, interior effects may be derived. When the identification of the inside of the cabinet is unnecessary, a neat outer appearance of the apparatus may be maintained.

In some cases, a colored coating or a vapor deposited film may be attached to the door panel 23. Thus, the panel 23 may be constructed such that the cultivation space S1 is selectively visible or invisible to the user.

In one example, the door 20 may include a door frame 22 that constitutes a perimeter of the door. A central portion of the door frame 22 may be opened to define an opening. The door panel 23 may be constructed to shield the opening of the door frame 22.

Further, the door 20 may include a door sealing 24 disposed on one face of the door frame 22 facing toward the cabinet 10 and disposed along a perimeter of the opening of the door frame 22. The door sealing 24 may absorb an impact force exerted from the door 20 onto the cabinet 10 when the door 20 is closed, thereby improving durability and reliability of the plant cultivation apparatus 1. Further, the door sealing 24 may prevent air flow from the cultivation space S1 and the cabinet 10 to the outside so that a temperature and a humidity of the cultivation space S1 may be kept constant. Further, the door sealing 24 may be made of an insulating material so that the cabinet 10 may be thermally insulated. Accordingly, the cultivation space S1 may maintain a temperature thereof set by the user.

In one example, the door 20 may have a door coupler 21 disposed on one side of the door frame 22 and coupled to the cabinet 10. As shown in FIG. 1 and FIG. 2, the door coupler 24 may be disposed on one side of left and right sides of the door frame 22. Accordingly, the door may be opened and closed in one direction of left and right directions around the user, thereby increasing the user's convenience. Further, the door 20 may be pivotably coupled to the cabinet 10 via the door coupler 24. The cultivation space S1 may be opened and closed according to pivoting of the door 20. Further, the door 20 may have a door handle 25 disposed at one of an upper end and a lower end of the door frame 22. The user may hold the handle 25 to open and close the door 20. When the door coupler 24 is disposed on one side of the left and right sides of the door frame 22, the door handle 25 may be disposed on the other side of the left and right sides of the door frame 22.

In one example, a lower cabinet 19 may constitute a bottom portion of the cabinet 10. The lower cabinet 19 may receive an air adjuster (not shown) therein that receives outside-air and supplies the outside-air to the cultivation space S1.

In the plant cultivation apparatus 1 according to an embodiment of the present disclosure, a plurality of beds 50 may be vertically arranged inside the cabinet 10. In the plant cultivation apparatus 1 according to the embodiment of the present disclosure, two beds 50 may be respectively disposed in an upper portion and a lower portion of the cabinet 10. Hereinafter, for convenience of description and understanding, the two beds 50 may be referred to as an upper bed 50 and a lower bed 50, respectively. In another example, at least three beds 50 may be arranged depending on a size of the cabinet 10.

Further, a plurality of cultivators 60 containing plant seeds and nutrients required for cultivation may be seated on a top face of the bed 50. Thus, the bed 50 may be referred to as a shelf or a tray. The interior of the cabinet 10 may act as the cultivation space S1 in which the plant is cultivated.

The cultivator 60 may be provided to be adapted to a combination of various kinds of seeds and corresponding nutrients. The user may select the cultivator to be adapted to a target plant type for cultivation. Further, the bed 50 may have a structure on which the cultivator 60 may be seated and by which a seating state thereof may be maintained.

Further, as will be described later, the bed 50 may have a communication channel 512 defined therein through which water supplied from a water supply 40 flows. Further, the bed 50 may maintain an adequate water-level therein so that water may be supplied to the cultivator 60 at all times.

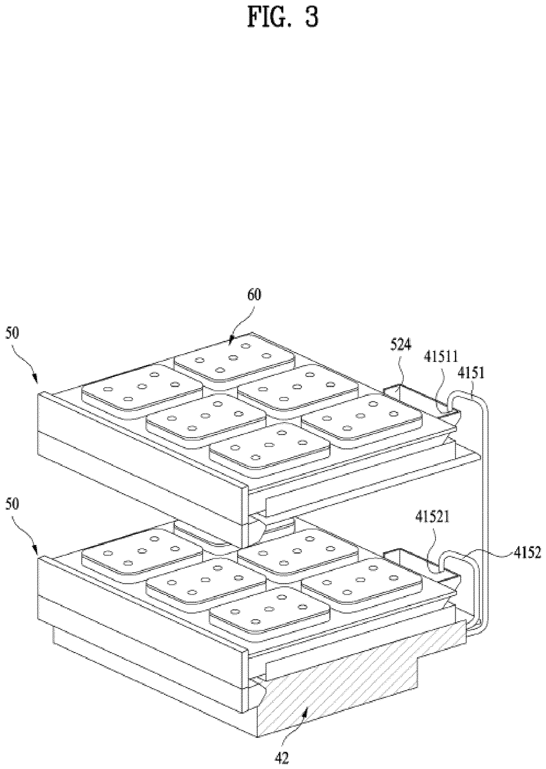

FIG. 3 is a perspective view showing a state in which a cultivator according to one embodiment is seated on a bed in a plant cultivation apparatus according to an embodiment of the present disclosure.

FIG. 3 shows the bed 50, the water supply 40, and the cultivator 60 disposed inside the cabinet 10 in the plant cultivation apparatus 1 according to one embodiment of the present disclosure.

The plant cultivation apparatus 1 according to one embodiment of the present disclosure may include the bed 50 disposed inside the cabinet, the cultivator 60 seated on the bed and receiving therein a cultivation medium 64 in which at least a portion of the plant is received, and the water supply 40 disposed inside the cabinet and configured to supply water to the bed 50.

The water supply 40 may include a water supply casing 42 having storage (not shown), a supply pump (not shown), a flow sensor (not shown), a branching valve (not shown), and a connective channel (not shown) as described below received therein.

The storage (not shown) may store therein water to be supplied to the cultivator 60 for the plant.

As shown in FIG. 3, the water supply casing 42 may be disposed below the bed and may be coupled to the cabinet 10.

Due to the water supply casing 42, the storage (not shown), the supply pump (not shown), the flow sensor (not shown), the branching valve (not shown), and the connective channel (not shown) are not exposed to the outside, thereby improving the reliability of supply 40, and achieving neat outer appearance.

In one example, the cultivator 60 may be seated on the bed. The nutrient liquid (hereinafter, water) from the water supply 40 may be fed to the cultivator 60 through the communication channel 411 which will be described later. The cultivator 60 may be constructed such that the water may be discharged to the storage (not shown) through the communication channel 411.

Further, the cultivator 60 may include a plurality of cultivators disposed on a top face of the bed 50. Thus, the plurality of cultivators 60 may receive different types of plants, respectively. Thus, the different types of plants may be cultivated in the cultivation space S1.

In other words, the cultivator 60 may be provided to be adapted to a combination of various kinds of seeds and corresponding nutrients. The user may select a plant to be cultivated and cultivate the plant in the cultivator 60.

Further, the cultivator 60 may be removably seated on the bed 50. Accordingly, the user may input the cultivation medium 64 containing the seeds of the plant therein into the cultivator 60 while the cultivator 60 is located out of the plant cultivation apparatus 1. Then, the user may seat the cultivator 60 on the bed 50 through one open face of the cabinet 10.

Further, when the plant grows and then a harvest timing arrives, the user may separate the cultivator 60 from the bed 50. Thus, the plant in the cultivator 60 may be easily harvested while the cultivator is located out of the plant cultivation apparatus 1, thereby increasing easiness and convenience of harvesting by the user.

Further, the cultivator 60 may have a shape extending from one side thereof to the opposite side thereof. A direction in which the cultivator 60 extends may be a first direction from the cultivation space S1 toward the door 20.

Further, as shown, while being seated on the top face of the bed 50, the plurality of cultivators 60 may be arranged to be spaced apart from each other in the first direction in which the cultivator 60 extends and a second direction perpendicular to the first direction.

Hereinafter, for convenience of description, a direction in which the cultivator 60 extends is defined as the first direction, while a direction perpendicular to the first direction is defined as the second direction.

In one example, the bed 50 may be embodied as a rectangular plate that partitions an inside of the cabinet 10. Although not shown in the drawing, the bed 50 may be seated into a retract and extend guide (not shown) defined in each of both opposing side faces of the cabinet 10 in the retracting and extending manner.

A bed water collector 625 constructed to receive water through the water supply 40 may be formed in one side of the bed 50. The bed water collector 625 may be connected to the communication channel 411 disposed inside the bed 50, such that the water supplied to the bed water collector 625 may be continuously supplied to the cultivator 60.

The water supply 40 may include a first upper supply channel51 extending to the bed water collector 625 of the upper bed 50 and a first lower supply channel52 extending to the bed water collector 625 of the lower bed 50. The first upper supply channel51 and the first lower supply channel52 may be configured to supply the water to the upper bed 50 and the lower bed 50, respectively. The water supply 40 may have water discharge holes 41511 and 41521 defined respectively at positions corresponding to the bed water collectors 625. Thus, the water supplied from the first upper supply channel51 and the first lower supply channel52 may be directly inflowed to the bed water collectors 625.

Each of the first upper supply channel51 and the first lower supply channel52 may be embodied as a metal pipe made of stainless steel. Thus, each of the first upper supply channel51 and the first lower supply channel52 may be managed hygienically and may be maintained in a rigid manner to prevent clogging thereof due to deformation or bending of a flow path, and to improve the reliability of water supply.

A water supply structure in which the water is fed to the upper bed 50 and a water supply structure in which the water is fed to the lower bed 50 may be the same only except for a difference in a vertical position thereof. The water supplied to the bed water collector 625 may supply moisture to the cultivator 60 mounted on the bed 50.

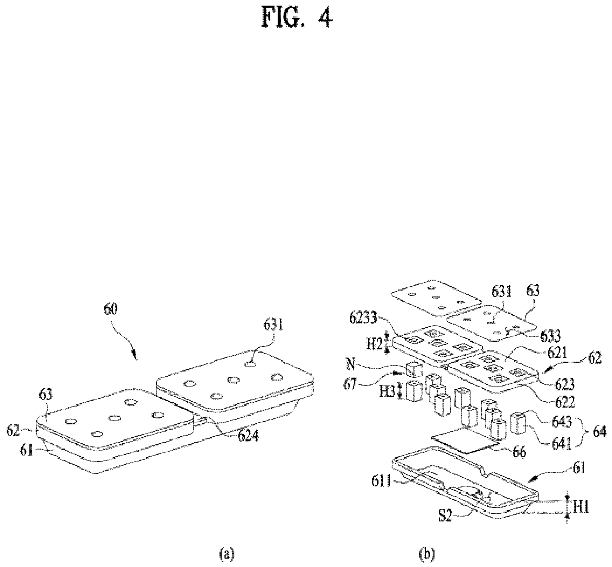

In one example, (a) in FIG. 4 is a perspective view showing one embodiment of a cultivator in the plant cultivation apparatus according to an embodiment of the present disclosure. (b) in FIG. 4 is an exploded view showing an embodiment of the cultivator in the plant cultivation apparatus according to an embodiment of the present disclosure.

As shown in FIG. 4, the cultivator 60 may include a cultivation vessel 61 seated on the bed 50 and constructed to have an open top, and a cover 62 for shielding the open top of the cultivation vessel 61.

The cultivation vessel 61 may be constructed to have the open top, and may be seated on the bed 50. Accordingly, the user may select the cultivator 60 corresponding to a type of the plant to be cultivated and may seat the selected cultivator 60 at a desired position on the bed 50 to start cultivation of the plant.

Further, the cultivation vessel 61 may include a bottom surface 611 of the cultivation vessel and may have a cultivation medium receiving space S2 defined therein and may be coupled to the cover 62.

Further, the cultivation vessel 61 may have a first communication hole 6135 defined therein through which water in the cultivation medium receiving space S2 is discharged to the communication channel 411, as will be described later. The cultivation medium receiving space S2 may receive water from the water supply 40 through the first communication hole 6135. The water in the cultivation medium receiving space S2 may be collected back into the water supply 40. Further, the first communication hole 6135 may be defined in the bottom surface 611 of the cultivation vessel 61 and communicate with the communication channel 411 disposed in the bed.

The cultivator 60 may include a cultivation filter 66 disposed on the bottom surface 611 of the cultivation vessel 61 for removing foreign substances from the water discharged or inflowing through the first communication hole 6135. The foreign material removed using the cultivation filter 66 may be a portion of the cultivation medium 64 produced in the plant growth process, or may be a portion of the root of the plant.

Further, the foreign material may be a portion of a stem or a leaf of a plant that is produced due to an upper water supply structure to be described later. The cultivation filter 66 may be configured to shield the first communication hole 6135, and to prevent inflow of foreign substances as produced in the cultivation medium receiving space into the water supply 40.

In one example, the cultivation vessel 61 may have the cultivation medium receiving space S2 defined therein for receiving therein the cultivation medium 64 in which at least a portion of the plant is received. The cultivation medium 64 may be received in the cultivation medium receiving space S2 defined in the cultivation vessel 61. The cultivation medium 64 may extend vertically from the bottom surface 611 of the vessel toward the cover 62 by a predetermined vertical dimension H3.

Nutrients necessary for the plant growth may be contained in the cultivation medium 64. When only water is supplied to the cultivation medium 64 without supply of additional components thereto, the plant growth may proceed at an adequate rate.

Further, the cultivation medium 64 may include a cultivation medium body 641 that defines the outer appearance of the cultivation medium 64 and a cultivation medium hole 643 that is defined at a top portion of the cultivation medium body. The cultivation medium 64 contains the seeds of the plant. The cultivation medium may be made of various materials capable of absorbing the water stored in the cultivation medium receiving space S2 and supplying the water to seeds or roots inside the cultivation medium 64.

In one example, the cover 62 may cover the cultivation medium receiving space S2 of the cultivation vessel 61. A top of the cultivation vessel 61 is open. Thus, the cover 62 may be disposed at a top of the cultivation vessel and may be coupled to the cultivation vessel 61.

In one example, the cultivation medium receiving space S2 may store therein water supplied to the cultivation medium 64. When the water is exposed to air out of the cultivator and to light from an artificial light source (not shown), reproduction of microorganisms in the water may become active, thereby adversely affecting the growth of the plant.

In order to prevent this situation, the cover 62 may cover the cultivation medium receiving space S2 of the cultivation vessel 61, so that the cultivation medium receiving space is prevented from being exposed to an environment out of the cultivator 60. Due to the cover 62, the water stored inside the cultivation medium receiving space S2 may be prevented from being exposed to light irradiated from the artificial light source (not shown) disposed above the top of the cultivator 60. Contact of the water with the air outside the cultivator 60 may be prevented.

Further, due to the cover 62, the roots of the plant grown in the cultivation medium 64 may be prevented from being exposed to the light source (not shown), so that the growth of the plant may be improved.

The cover 62 may be coupled to the cultivation vessel 61 using a bolt-nut structure. However, the disclosure is not limited thereto. Hereinafter, as shown in the drawings, an example in which the cover 62 is coupled to the cultivation vessel 61 in a press-fitting manner is described.

In one example, the plant cultivation apparatus 1 according to one embodiment of the present disclosure includes a nutrient feeder 67 located in the cultivation medium receiving space S2. The nutrient for the plant is received in the nutrient feeder 67

The nutrient feeder 67 may be disposed to be spaced apart from the bottom surface 611 of the cultivation vessel 61. When the nutrient feeder 67 is brought into contact with water stored in the cultivation medium receiving space S2, the nutrient therein may be mixed with the water and then the mixture may be supplied to the cultivation medium.

In one example, the cover 62 may include a cultivation medium receiving portion 623 which is formed at a position corresponding to that of the cultivation medium 64 and into which an upper end of the cultivation medium is inserted. Due to the cultivation medium receiving portion 623, the cultivation medium 64 may be fixedly received inside the cultivation vessel 61 when the cover 62 is coupled to the cultivation vessel.

The cover 62 may have a predetermined vertical dimension H2 and may extend from a bottom to a top thereof. The cultivation medium receiving portion 623 may have a vertical dimension equal to the vertical dimension H2 of the cover 62 such that the upper end of the cultivation medium 64 may be received therein.

The number of the cultivation medium receiving portions 623 may correspond to the number of the cultivation mediums 64. In order to fix the position of the cultivation medium 64, the number of the cultivation medium receiving portions 623 may be greater than or equal to the number of the cultivation medium 64.

As shown in (b) in FIG. 4, the cultivation medium receiving portion 623 may be defined in a top face of the cover. The cultivation medium receiving portion 623 may include a plurality of the cultivation medium receiving portions. The present disclosure is not necessarily limited thereto. A distance between adjacent ones of the plurality of cultivation medium receiving portions 623 may be appropriately designed according to the type of plant to be cultivated.

The cultivation medium receiving portion 623 may have a cover through-hole 6233 defined at a position thereof corresponding to a position of the cultivation medium 64 so as to expose at least a portion of a top face of the cultivation medium 64. The cover through-hole 6233 may extend through the top face of the cover 62.

A seed of the plant received in the cultivation medium hole 643 germinates. A stem of the plant may extend through the cover through-hole 6233 and may grow toward a space above the top of the cover 62. Therefore, for smooth growth of the plant, a diameter of the cover through-hole 6233 may be defined to be larger than a diameter of the cultivation medium hole 643.

That is, in a top view of the cultivator 60, the cover through-hole 6233 may be defined to expand along a radial direction of the cultivation medium hole 643. The diameter of the cover through-hole 6233 may be appropriately designed in consideration of the size of the plant being cultivated.

Further, a center of the cover through-hole 6233 may be positioned to correspond to a center of the cultivation medium hole 643. Thus, when the plant germinates and grows, and thus extends to be exposed to a space out of the cultivation medium 64, the plant may be recognized by the user due to the cover through-hole 6233.

In one example, the cultivator 60 may further include an indicator 63 disposed above the top face of the cover 62 to minimize exposure of the cultivation medium 64. A seed name of the plant may be written on the indicator. The seed name of the plant may be marked on the indicator 63 so that the type of the plant grown in the cultivation space may be easily recognized by the user.

The indicator 63 may be constructed to cover the top face of the cover 62. As shown in the figure, the indicator 63 may include a plurality of indicators and may be disposed above the top face of the cover 62. The indicator 63 may be coupled to a remaining area of the cover 62 except for a cover coupler 624.

Thus, in the top view of the cultivator 60, a top face 633 of the indicator 63 may be exposed to the outside, and a top face of the cover except for the cover coupler 624 may not be exposed to the outside.

The indicator 63 may have an indicator hole 631 defined therein at a position corresponding to that of the cover through-hole 6233 and may have a diameter smaller than the diameter of the cover through-hole 6233, so that exposure of the cultivation medium 64 to the outside may be prevented. The plant may grow and extend through the indication hole 631 and toward a space above the top of the cultivator 60.

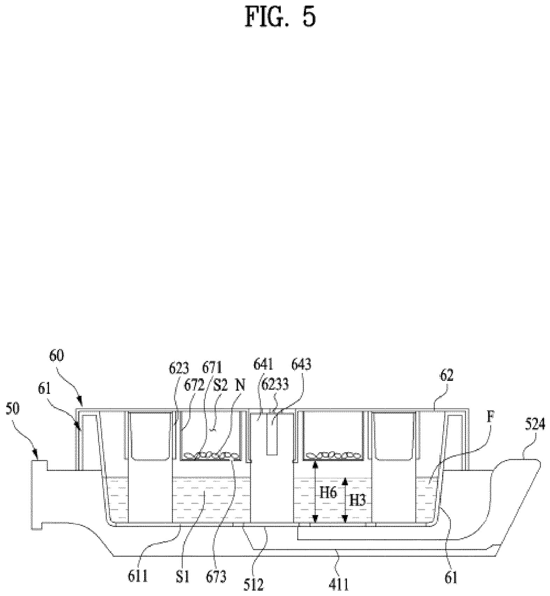

FIG. 5 is a side view showing an embodiment of a cultivator including the nutrient feeder 67 in the plant cultivation apparatus 1 according to an embodiment of the present disclosure.

The nutrient feeder 67 may be disposed to be spaced apart from the cultivation medium receiving portion 623, and may be coupled to the bottom surface of the cover 62.

A bottom portion 671 of the nutrient feeder 67 may be spaced apart from the bottom surface 611 of the cultivation vessel 61 by a predefined spacing H6. The nutrient feeder 67 may have a nutrient storage space S3 defined therein, so that nutrient N required for the plant growth may be stored in the nutrient storage space S3.

Further, the nutrient feeder 67 may have a nutrient feeding hole 673 defined therein communicating with the cultivation medium receiving space S2. The nutrient feeder 67 may be constructed such that when the water stored in the cultivation medium receiving space S2 flows into the nutrient feeder 67, the water together with the nutrient N may be discharged through the nutrient feeding hole 673.

One face of the nutrient feeder 67 facing toward the cultivation medium receiving space S2 may be made of a mesh material, so that the nutrient N may be dissolved in the water which may, in turn, be supplied to the cultivation medium receiving space S2.

The nutrient N may be embodied as water-soluble solid dissolved in the water. The disclosure is not necessarily limited thereto. As long as the nutrient N is mixed with the water flowing into the nutrient storage space S3 and the mixture is discharged to the cultivation medium receiving space S2, a type of the nutrient N may not be particularly limited.

Further, the nutrient feeder 67 may include a side face 672 extending from the cover 62 toward the bottom surface 611 of the cultivation vessel 61, and the bottom portion 671 extending from the side face 672 in a horizontal direction. The nutrient feeding hole 673 may be defined in the bottom portion 671.

The side face 672 and the bottom portion 671 together with the bottom surface of the cover 62 may define the nutrient storage space S3. A size of each of the side face 672 and the bottom portion 671 may be appropriately set according to a size of the plant, and a size of each of the cultivation medium, the cultivation medium vessel, and the cover 62.

The nutrient feeding hole 673 may be defined in the side face 672. The nutrient feeder 67 may include a plurality of feeders. The nutrient feeding hole 673 may include a plurality of holes.

The bottom portion 671 of the nutrient feeder 67 may be spaced apart from the bottom surface 611 of the cultivation vessel 61 by the predefined spacing H6. When the nutrient feeding hole 673 is defined in the bottom portion 671, the nutrient feeding hole 673 may be spaced from the bottom surface 611 of the cultivation vessel 61 by the predefined spacing H6.

When the nutrient N is embodied as a solid, a size of the solid may be larger than a size of the nutrient feeding hole 673. Thus, when water does not flow into the nutrient feeder 67, the nutrient N may be prevented from flowing through the nutrient feeding hole 673.

A distance between both opposing side faces 672 of the nutrient feeder 67 may be defined as a diameter thereof. The distance may be defined to be smaller than a distance between adjacent one of a plurality of cultivation mediums 64.

In one example, the first water supply channel5 may include a first lower supply channel52 and a first upper supply channel51. The first water supply channel5 may include the communication channel 411 which is disposed in the bed 50 and communicates with the first communication hole 6135, and supplies water from the bed water collector 625 to the first communication hole 6135 or collects the water from the bed water collector 625.

Further, the water supplied to the cultivator 60 through the communication channel 411 may be continuously supplied to the cultivator 60. In detail, the communication channel 411 may communicate with the bed water collector 625. The communication channel 411 may communicate with the storage (not shown) included in the water supply 40 which will be described later, so that the water discharged from the cultivator 60 may be discharged to the storage (not shown) through the communication channel 411.

Further, a predetermined vertical level H3 of the water F supplied from the first water supply channel5 to the cultivation medium receiving space S2 through the communication channel 411 may be defined.

When the water is continuously supplied from the first water supply channel5 to the cultivation medium receiving space S2, the vertical level H3 of the water F may be increased. When the vertical level of the water is higher than the vertical level H6 of the nutrient feeding hole 673, the water inflows into the nutrient storage space S3 and thus the nutrient N may be dissolved in the water. The dissolved nutrient N may be fed back to the cultivation medium 64 through the nutrient feeding hole 673.

Thus, due to the above structure, the plant cultivation apparatus 1 according to an embodiment of the present disclosure adjusts an inflow amount of water supplied into the cultivation medium receiving space S2 when additional nutrient supply is required such that the nutrient N from the nutrient feeder 67 may be supplied to the plant.

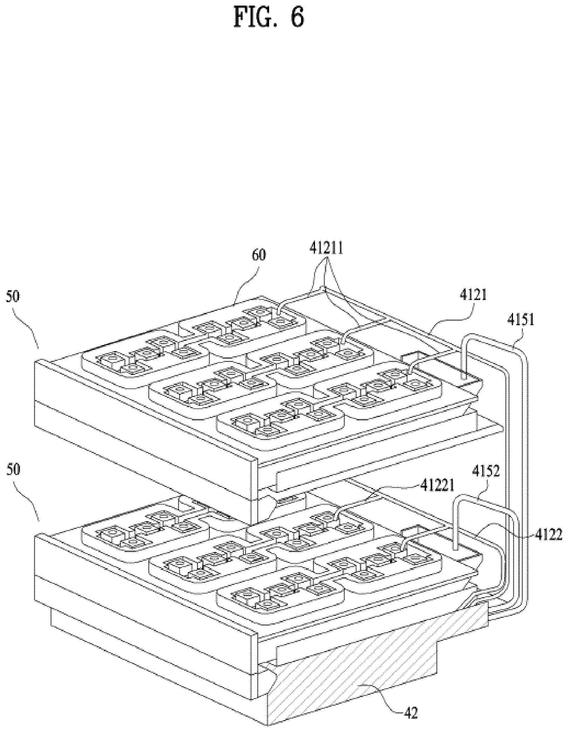

In one example, FIG. 6 is a perspective view showing another embodiment of a cultivator in the plant cultivation apparatus according to one embodiment of the present disclosure. Hereinafter, descriptions duplicate with those of the above-described structure will be omitted.

In the plant cultivation apparatus 1 according to an embodiment of the present disclosure, the cultivator 60 may be seated on the bed 50 and may include the cultivation vessel 61 having an open top, and a cover 62 for shielding the open top of the cultivation vessel 61.

Further, the cultivator may further include a cover channel 65 disposed in a top face of the cultivator 60 for receiving water to be supplied to the plant. The water supply 40 may include a second water supply channel2.

The second water supply channel2 may be constructed such that at least a portion of the second water supply channel2 is positioned above the cover channel 65 such that the water to is fed to the cover channel 65 therethrough.

Further, the cover channel 65 may be disposed in the top face of the cover. The cover channel 65 may be constructed to communicate with the inside of the cultivator 60 so that the water supplied from the second water supply channel2 is guided to the cultivation medium therethrough.

The water supply 40 may include a supply channel that supplies water to the cultivator 60, and storage (not shown) that supplies water to the cultivator 60 and collects the water therefrom and stores the collected water therein.

As shown in FIG. 3, the water supply 40 may be configured to supply water to the bed water collector 625 of the bed 50 through the first water supply channel5.

Further, as shown in FIG. 6, the water supply 40 may be configured to supply water to the cover channel 65 through the second water supply channel2.

Specifically, the second water supply channel2 may include a second upper supply channel21 for supplying water to the cover channel 65 of the upper bed 50 among the plurality of beds 50, and a second lower supply channel22 that supplies water to the cover channel 65 of the lower bed 50.

Each of the second upper supply channel21 and the second lower supply channel22 may be disposed independently, and may extend to face toward each of the cover channels 65, so that water necessary for plant growth may be supplied thereto.

The second water supply channel2 may be connected to the storage (not shown) and may extend upward. The water flows from the storage (not shown) into the second water supply channel2 along which the water flows upward.

Further, the second upper supply channel21 and the second lower supply channel22 may have a second upper supply branch channel 41211 and a second lower supply branch channel 41221 facing toward upper and lower cover channels 65 and supplying water to the upper and lower cover channels 65, respectively.

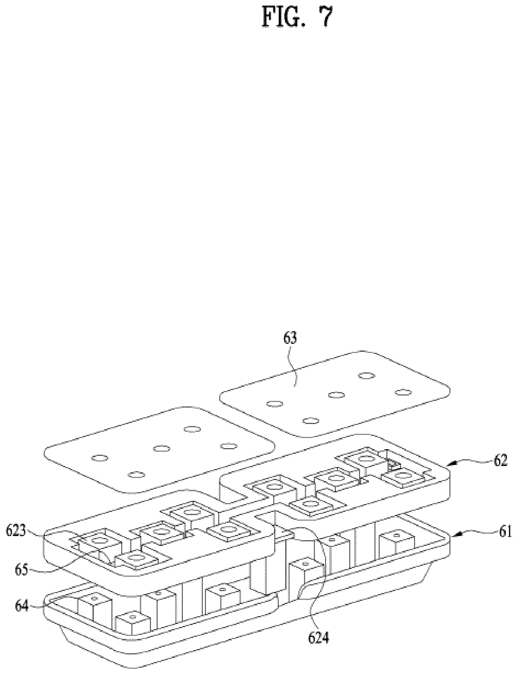

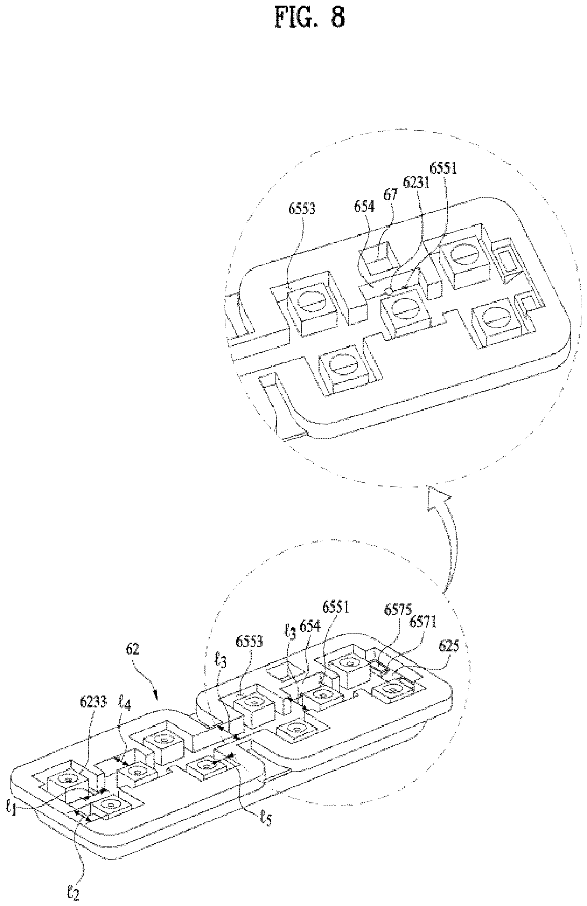

FIG. 7 is an exploded view showing another embodiment of a cultivator in the plant cultivation apparatus according to one embodiment of the present disclosure. FIG. 8 is a perspective view showing another embodiment of a cultivator in the plant cultivation apparatus according to one embodiment of the present disclosure. Hereinafter, descriptions duplicate with those of the above-described structure will be omitted.

The cover channel 65 may be constructed to overlap with at least a portion of the cultivation medium receiving portion 623. In other words, the cover channel 65 may be constructed such that one face of the cultivation medium receiving portion 623 is exposed to the inside of the cover channel 65.

Further, the cultivation medium receiving portion 623 may have a second inflow hole 6232 for providing water from the cover channel 65 to the cultivation medium 64. The second inflow hole 6232 may be defined to be exposed to the inside of the cover channel 65. The water supplied from the supply channel to the cover channel 65 is received in the cover channel 65, and flows into the second inflow hole 6232, and then is supplied to the cultivation medium 64.

As shown in FIG. 8, the cover channel 65 may include a first cover channel 6551 extending from one side to the opposite side of the cover and a second cover channel 6553 branching from the first cover channel 6551. A direction in which the first cover channel 6551 extends may be a direction in which the cultivator 60 extends toward the door 20 as described above.

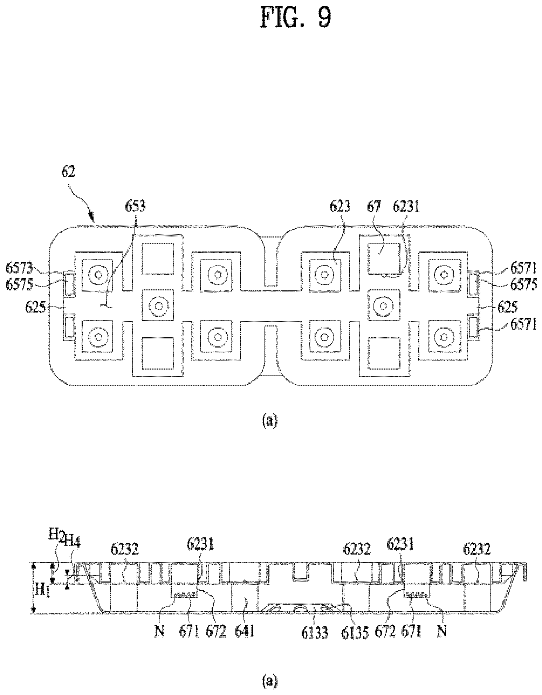

Further, a direction in which the second cover channel 6553 branches from the first cover channel 6551 and extends may be inclined relative to a direction in which the first cover channel 6551 extends. As shown in FIG. 9, the direction in which the second cover channel 6553 branches from the first cover channel 6551 and extends may be perpendicular to the direction in which the first cover channel 6551 extends.

Further, the cover channel 65 may be defined by depressing a portion of the top face of the cover 62. The cultivation medium receiving portion 623 may protrude upward from a bottom surface 653 of the cover channel 65 and may be positioned inside the cover channel 65.

As described above, the cultivation medium 64 may include a plurality of mediums. The cultivation medium receiving portion 623 may include a plurality of cultivation medium receiving portions. Thus, the cover channel 65 may extend so as to connect a plurality of points corresponding to positions of the plurality of cultivation medium 64 to each other.

Further, the plurality of cultivation medium receiving portions 623 may be constructed to be positioned inside the first cover channel 6551 and the second cover channel 6553. Accordingly, the second inflow hole 6232 through which the water stored in the cover channel 65 flows into the inside of the cultivation medium receiving portion 623 may include a plurality of second inflow holes arranged along a circumference of the cultivation medium receiving portion 623. Thus, the water in the cover channel 65 may be more smoothly supplied to the cultivation medium 64.

The second inflow hole 6232 may be in contact with the bottom surface 653 of the cover channel 65 so that the water received in the cover channel 65 may flow into the second inflow hole.

The cultivation medium 64 may be in contact with the inner face of the cultivation medium receiving portion 623. The upper end of the cultivation medium 64 may be inserted into the cultivation medium receiving portion. The second inflow hole 6232 may be constructed to extend from the inner face of the cultivation medium receiving portion 623 toward the cover channel 65 to guide the water received in the cover channel 65 to the cultivation medium 64.

In one example, a longitudinal direction I1 of the cultivation medium receiving portion 623 along an extending direction of the first cover channel 6551 may be equal to a transverse length 12 of the cultivation medium receiving portion 623 perpendicular to the extending direction of the first cover channel 6551. The longitudinal and transverse lengths I1 and 12 of the cultivation medium receiving portion 623 may be sized based on a shape of the cultivation medium 64.

A width I3 of the cover channel 65 perpendicular to the extending direction of the first cover channel 6551 may be defined to be larger than each of the transverse lengths I1 and I2 of the cultivation medium receiving portion 623. Thus, the flow of water along the cover channel 65 may be achieved smoothly.

Further, the cultivation medium receiving portion 623 may be spaced apart from a sidewall 654 of the cover channel 65 by a predefined spacing 15. The predefined spacing I5 between the sidewalls 654 of the cover channel 65 and the cultivation medium receiving portion 623 may be sized so that the flow of water along the cover channel 65 is not too fast.

The predefined spacing I5 may be appropriately designed based on a vertical dimension of the cover channel 65 in the top face of the cover 62, a size of the cultivation medium receiving portion 623, and an amount of water supplied to the cover channel 65.

Further, the sidewall 654 of the cover channel 65 may be formed such that a portion thereof facing toward the cultivation medium receiving portion 623 is recessed in a direction away from the cultivation medium receiving portion 623.

In other words, the portion of the sidewall 654 of the cover channel 65 facing toward the cultivation medium receiving portion 623 closest thereto may be recessed so as to be spaced from the cultivation medium receiving portion 623 by the predefined spacing I4, thereby defining a predetermined space between the cultivation medium receiving portion 623 and the sidewall.

Thus, the water moving around the cultivation medium receiving portion 623 may be received in a larger amount in a space between the cultivation medium receiving portion 623 and the sidewall 654 of the cover channel 65.

Thus, a time duration for which the water received in the space between the cultivation medium receiving portion 623 and the sidewall 654 of the cover channel 65 is in contact with the cultivation medium receiving portion 623 may be increased. Thus, a time duration for which the water flows into the second inflow hole 6232 of the cultivation medium receiving portion 623 may be increased.

In one example, the cover channel 65 may have a first inflow hole 6231 which communicates with the nutrient storage space S3 inside the nutrient feeder 67. The water may be supplied to the nutrient feeder 67 through the first inflow hole 6231.

The water supplied from the cover channel 65 through the first inflow hole 6231 may flow into the nutrient storage space S3. The nutrient N may be dissolved in and missed with the water. The mixture solution may flow through the nutrient feeding hole 673.

Further, as a vertical dimension from the bottom surface 653 of the cover channel 65 to the first inflow hole 6231 is smaller, the inflow of water from the cover channel 65 to the first inflow hole 6231 may be achieved more efficiently. Accordingly, the first inflow hole 6231 may be in contact with the bottom surface 653 of the cover channel 65 so that the water received in the cover channel 65 may flow into the first inflow hole.

In other words, a portion of a diameter of one end of the first inflow hole 6231 exposed toward the inside of the cover channel 65 may be in contact with the bottom surface 653 of the cover channel 65.

Thus, after the supply of water from the second water supply channel2 is finished, the water supplied to the cover channel 65 does not remain on the bottom surface 653 of the cover channel 65 but an entire amount thereof flows into the second inflow hole 6232. Then, the water together with the nutrient N may be supplied to the cultivation medium receiving space S2.

In one example, the cover channel 65 may include protrusions 6571 and 6573 protruding upward from the bottom surface 653 of the cover channel 65. The protrusions 6571 and 6573 may include a first protrusion 6571 positioned on one side of the cover 62 and positioned closer to the water supply 40 than the cultivation medium receiving portion 623 is.

Further, the protrusions 6571 and 6573 may further include a second protrusion 6573 located on the opposite side of the cover. The first protrusion 6571 and the second protrusion 6573 may be respectively disposed at one side and the opposite side in the extending direction of the first cover channel.

Because the first protrusion 6571 and the second protrusion 6573 are disposed at one side and the opposite side, respectively, a flow rate of water moving inside the cover channel 65 may be kept constant.

The cover channel 65 may include a third inflow hole 6575 defined in a top face of each of the protrusions 6571 and 6573 and communicating with the inside of the cultivation vessel. In other words, the third inflow hole 6575 may be constructed to communicate with the cultivation medium receiving space S2. Water from the cover channel 65 may flow into the cultivation medium 64 through the third inflow hole 6575.

Further, when the amount of water supplied from the supply channel to the cover channel 65 is too large, the water supplied to the cover channel 65 through the third inflow hole 6575 may be guided to the cultivation medium receiving space S2.

Further, depending on the type of the plant cultivated in the plant cultivation apparatus 1, the amount of the water supplied to the cultivator 60 may be greater than an amount in which the cover channel 65 may receive the water.

The water may be supplied to the cultivation medium through the first inflow hole 6231 communicating with the nutrient feeder 67, the second inflow hole 6232 defined in the cultivation medium receiving portion, and the third inflow hole 6575 defined in each of the protrusions 6571 and 6573.

In one example, FIG. 9 is a top face view and a side view showing a cultivator in the plant cultivation apparatus according to one embodiment of the present disclosure. (a) in FIG. 9 shows a top view of the cultivator 60. (b) in FIG. 9 shows a side view of the cultivator 60. Hereinafter, descriptions duplicate with those of the above-described structures will be omitted.

In the plant cultivation apparatus 1 according to an embodiment of the present disclosure, the nutrient feeder 67 may be constructed to protrude upward from the bottom surface 653 of the cover channel 65 and to be spaced apart from the cultivation medium receiving portion 623.

Specifically, a second cover channel 6553 of the cover channel 65 may define a channel along the circumference of the nutrient feeder 67. A plurality of first inflow holes 6231 may be arranged along the circumference of the nutrient feeder 67.

That is, the first inflow hole 6231 may extend through the side face 672 of the nutrient feeder 67, so that the cover channel 65 and the nutrient storage space S3 communicate with each other via the first inflow hole 6231.

The first inflow holes 6231 may include a plurality of holes. Thus, the water supplied to the cover channel 65 may efficiently flow into the nutrient storage space S3. Thus, the nutrient N may be efficiently supplied to the cultivation medium 64 through the nutrient feeding hole 673.

A size of the nutrient feeder 67 may be defined to correspond to a size of the cultivation medium receiving portion 623. The nutrient feeder 67 may be constructed to be spaced apart from the cultivation medium receiving portion 623.

In one example, the first inflow hole 6231 may be defined to contact the bottom surface 653 of the cover channel 65. In some cases, the second inflow hole 6232 may be disposed to be spaced apart from the bottom surface 653 of the cover channel 65, so that a predetermined vertical spacing may be defined between the bottom surface 653 of the cover channel and the second inflow hole 6232.

This is because the nutrient N may be efficiently supplied to the cultivation medium 64 when the water supplied to the cover channel 65 flows into the first inflow hole 6231 rather than when the water supplied to the cover channel 65 flows into the second inflow hole 6232.

In one example, the supply channel may have discharge holes 41511 and 41521 through which water is discharged to the cover channel 65. The cover 62 may include a water collector 625 which may be located below the discharge holes 41511 and 41521. Thus, the water discharged from the discharge holes 41511 and 41521 may be supplied to the water collector 625. The cover channel 65 may be constructed to be connected to the water collector 625 and to receive water therefrom.

Further, the water collector 625 may be disposed at each of one side and the opposite side in the direction in which the cover channel 65 extends. The first protrusion 6571 may include a pair of protrusions. The water collector 625 may be positioned between the pair of the first protrusions 6571 and may collect the water supplied from the discharge holes 41511 and 41521 and guide the collected water to the cover channel 65.

Further, the water collector 625 may have a predetermined vertical dimension H4 based on the bottom surface 653 of the cover channel 65. The water collector 625 may be inclined such that a vertical level thereof is lowered as the collector 625 extends toward the cover channel 65. One end thereof connected to the cover channel 65 together with the bottom surface 653 of the cover channel 65 may define a continuous face.

When the vertical dimension of the discharge holes 41511 and 41521 from the bottom surface 653 of the cover channel 65 is excessively larger, water falling to the water collector 625 may flow out of the cover channel 65.

However, due to the structure in which the water collector 625 has the inclination such that a vertical level thereof is lowered as the collector 625 extends toward the cover channel 65, the water collector 625 may minimize water leakage to the outside of the cover channel 65 while stably guiding the water toward the cover channel 65.

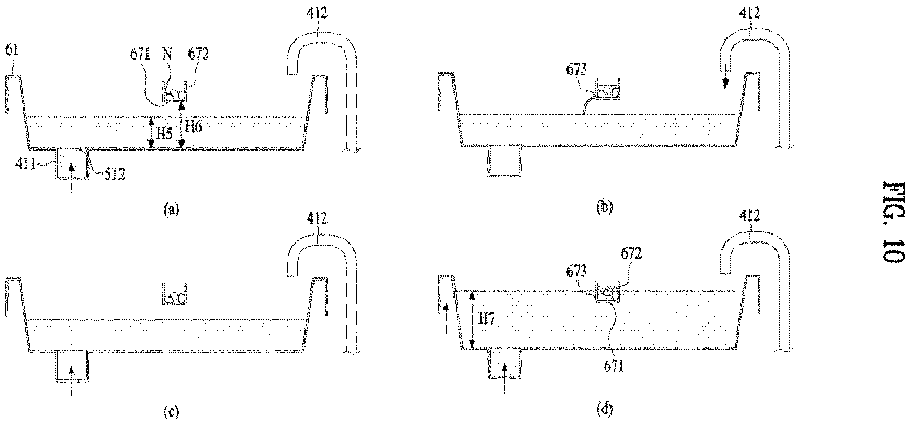

In one example, FIG. 10 is a diagram showing a water supply process of several embodiments in the plant cultivation apparatus according to one embodiment of the present disclosure. Hereinafter, descriptions duplicate with those of the above-described structures will be omitted.

(a) and (b) in FIG. 10 show the process of supplying water to the nutrient storage space S3 of the nutrient feeder 67 through the second water supply channel2. The structures of the cover 62 and the cover channel 65 are the same as the structures shown in FIG. 9. Thus, the structures of the cover 62 and the cover channel 65 are omitted from FIG. 10. Hereinafter, descriptions will be made while the structures of the cover 62 and the cover channel 65 are omitted.

Hereinafter, a vertical level of a component may be defined as a vertical dimension from the bottom surface 611 of the cultivation vessel 61.

The plant cultivation apparatus 1 according to an embodiment of the present disclosure may further include a controller 90 for controlling the water supply 40. The controller 90 may be configured to control a supply pump (not shown) that controls the supply of water in the water supply 40, and a branching valve (not shown) that controls the opening and closing of the first water supply channel5 and the second water supply channel2.

In one example, as shown in (a) in FIG. 10, in a state where additional nutrient N is not required, water is not supplied to the nutrient feeder 67, and water is supplied from the communication channel 411 to the cultivation medium receiving space S2 through the first water supply channel5.

In this case, the controller 90 may block the second water supply channel2 and may allow the water to be supplied to the cultivation medium receiving space S2 through the first water supply channel5. In other words, the controller 90 may adjust the branching valve (not shown) to supply water to the cultivator 60 selectively through one of the first water supply channel5 and the second water supply channel2.

When water is supplied to the cultivation medium receiving space S2, a vertical level H5 of the water-surface of the cultivation medium receiving space S2 may be lower than a vertical level H6 of the nutrient feeding hole 673. Accordingly, it may be prevented that the water in the cultivation medium receiving space S2 flows into the nutrient feeder 67, and thus the nutrient N is dissolved in water and thus the mixed solution flows through the nutrient feeding hole 673.

As shown in (b) in FIG. 10, when additional nutrient is needed in the cultivation medium 64, the controller 90 may control the water supply 40 to block the first water supply channel5 and allow the water to be supplied into the cover channel 65 through the second water supply channel2.

In this case, water flows into the nutrient storage space S3 in the nutrient feeder 67 and thus the nutrient N in the nutrient feeder 67 is dissolved in and mixed with water and thus the mixed solution flows into the cultivation medium receiving space S2.

In one example, as shown in (c) in FIG. 10, in a state where additional nutrient N is not required, water is not supplied to the nutrient feeder 67, and water from the communication channel 411 is supplied to the cultivation medium receiving space S2 through the first water supply channel5. The supply schemes of the water to the cultivation medium receiving space in (a) and (b) in FIG. 10 may be the same as each other.

Further, in (c) in FIG. 10, when water is supplied to the cultivation medium receiving space S2, the vertical level H5 of the water-surface of the cultivation medium receiving space S2 may be lower than the vertical level H6 of the nutrient feeding hole 673. Accordingly, it may be prevented that the water in the cultivation medium receiving space S2 flows into the nutrient feeder 67, and thus the nutrient N is dissolved in water and thus the mixed solution flows through the nutrient feeding hole 673.

In one example, as shown in (d) in FIG. 10, when it is determined that the supply of additional nutrient N is necessary, the water supply may be controlled so that the water is supplied to the first water supply channel5 such that a vertical level H7 of the water-surface in the cultivation medium receiving space S2 is higher than the vertical level H6 of the nutrient feeding hole.

As will be described later, in (a) and (c) in FIG. 10, the controller 90 may control the water supply 40 to perform a general mode S100. Further, in (b) in FIG. 10, the controller 90 may control the water supply 40 to perform an upper water supply mode S340. Further, in (d) in FIG. 10, the controller 90 controls the water supply 40 to perform an additional water supply mode S330.

The upper water supply mode S340 is the same as the additional water supply mode S330 in that in both modes, the water is supplied from the water supply 40 to the nutrient feeder 67. The additional water supply mode S330 may be different from the upper water supply mode S340 in that the vertical level of the water in the cultivation medium receiving space S2 in the additional water supply mode S330 is higher than that in the upper water supply mode S340.

That is, the additional water supply mode S330 may be performed when it is necessary to additionally supply the amount of water supplied to the cultivation medium 64 based on the type of the plant.

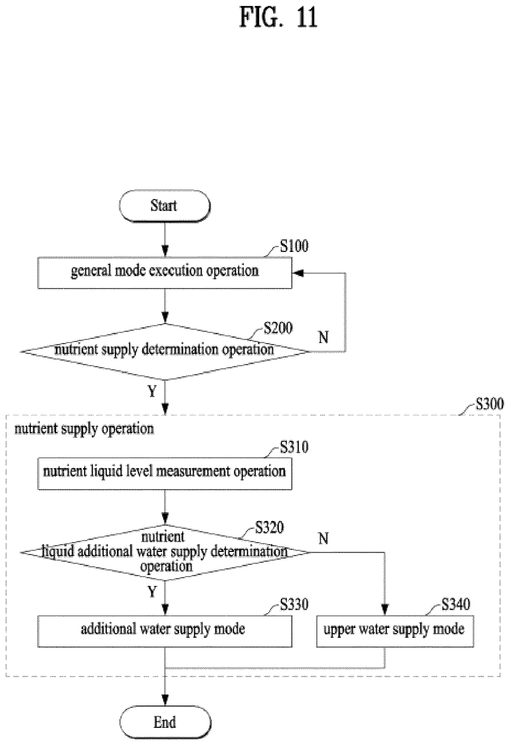

FIG. 11 is a view showing a control mode performed by the controller in the plant cultivation apparatus according to an embodiment of the present disclosure. Hereinafter, descriptions duplicate with those of the above-described structures will be omitted.

The controller 90 may be configured to control the water supply 40 to perform the general mode S100 as described above in a general mode execution operation S100 to supply the water to the cultivation medium 64. After the general mode execution operation S100, the controller 90 may perform a nutrient supply determination operation S200 to determine whether it is necessary to supply additional nutrient N to the cultivation medium 64.

A result of the nutrient supply determination operation S200 may be determined based on the user's input or a growth stage of the plant stored in the memory.

When it is determined that there is no need for additional nutrient supply in the nutrient supply determination operation S200, the controller 90 may perform the general mode execution operation S100.

Conversely, when it is determined that additional nutrient supply is necessary in the nutrient supply determination operation S200, the controller 90 may control the water supply 40 to perform a nutrient supply operation S300 to supply water to the nutrient feeder 67.

The controller 90 may perform a nutrient liquid level measurement operation S310 for measuring the vertical level of the water-surface using a sensor (not shown) for measuring a vertical level of a water surface in the cultivation medium receiving space S2.

After the nutrient liquid level measurement operation S310, it may be determined in the nutrient liquid additional water supply determination operation S320 that it is necessary to increase the vertical level H7 of the water-surface to be higher than the vertical level H7 of the nutrient feeding hole. In this case, the controller may perform the additional water supply mode S330.

Conversely, after the nutrient liquid level measurement operation S310, it may be determined in the nutrient liquid additional water supply determination operation S320 that it is not necessary to increase the vertical level H7 of the water-surface to be higher than the vertical level H7 of the nutrient feeding hole. In this case, the controller 90 may perform the upper water supply mode S340.

In this way, the controller 90 may control the water supply 40 to supply the nutrient based on the growth stage of the plant. Thus, the user's convenience and the efficiency of the plant cultivation may be increased.

Although various embodiments of the present disclosure have been described in detail, those of ordinary skill in the art to which the present disclosure pertains may make various modifications to the above-described various embodiments without departing from the scope of the present disclosure. The scope of the present disclosure should not be limited to the described various embodiments and should be defined by the claims to be described later, and equivalents to the claims.

## Claims

1. A plant cultivation apparatus comprising:
a cabinet (10);
a bed (50) disposed in the cabinet;
a cultivator (60) seated on the bed, the cultivator designed to receive therein a cultivation medium in which at least a portion of a plant is received; and
a water supply (40) disposed at the cabinet and configured to supply water to the cultivator,
wherein the cultivator includes:
a cultivation vessel (61) seated on the bed and having defined therein a cultivation medium receiving space (S2) for receiving the cultivation
medium; the cultivation vessel (61) having an open top so that the cultivation medium receiving space is exposed outwardly through the open top;
a nutrient feeder (67) located in the cultivation medium receiving space, the nutrient feeder designed to hold a nutrient for the plant; and
a cover (62) disposed on the open top of the cultivation vessel to close the cultivation medium receiving space;
wherein the cultivation vessel is configured such that water supplied from the water supply flows into the cultivation medium receiving space and is fed to the cultivation medium therein,
wherein the nutrient feeder is spaced apart from a bottom surface (611) of the cultivation vessel,
wherein the nutrient of the nutrient feeder is mixed with the water in contact with the nutrient feeder inside the cultivation medium receiving space and supplied to the cultivation medium with the water, **characterised in that**
the cultivator includes a cover channel (65) defined in a top face of the cover and configured to receive water supplied from the water supply,
wherein the cover channel has a first hole communicating with the inside of the nutrient feeder, wherein water is supplied to the nutrient feeder through the first inflow hole.

2. The apparatus of claim 1, wherein the water supply includes a first water supply channel extending towards the bed and configured to discharge water,
wherein the cultivation vessel includes a first communication hole through which water discharged from the first water supply channel flows into the cultivation medium receiving space.

3. The apparatus of claim 1 or 2, wherein the nutrient feeder includes a nutrient feeding hole to connect an inside of the nutrient feeder storing the nutrient with the cultivation medium receiving space,
wherein the water in the cultivation medium receiving space flows into the inside of the nutrient feeder through the nutrient feeding hole, and is mixed with the nutrient.

4. The apparatus of claim 1, wherein the cover channel is defined by a recessed portion of the top face of the cover,
wherein the cover includes a cultivation medium receiving portion designed to receive an upper end of the cultivation medium in the cultivation medium receiving space,
wherein the cultivation medium receiving portion is disposed in the cover channel and protrudes upwards from a bottom surface of the cover channel.

5. The apparatus of claim 4, wherein the first inflow hole is defined so as to be in contact with the bottom surface of the cover channel.

6. The apparatus of claim 4 or 5, wherein the nutrient feeder is disposed at the cover, and is spaced apart from the cultivation medium receiving portion, wherein the first inflow hole is disposed at a periphery of the nutrient feeder.

7. The apparatus of claim 6, wherein the nutrient feeder has a nutrient feeding hole in communication with the cultivation medium receiving space,
wherein the nutrient feeder has a side face extending from the cover toward the bottom surface of the cultivation vessel, and a bottom portion connected to the side face, wherein the nutrient feeding hole is defined in the bottom portion,
wherein the first inflow hole penetrates the side face and communicates with the inside of the nutrient feeder.

8. The apparatus of claim 7, wherein the water supply further includes a second water supply channel at least partially located above the cover channel to supply water to the cover channel,
wherein water supplied from the second water supply channel to the cover channel flows through the first inflow hole and into the nutrient feeder.

9. The apparatus of claim 8, further comprising a controller disposed in the cabinet and configured to control the water supply,
wherein in a general mode, the controller is configured to control the water supply to supply water to the cultivation medium receiving space through the first water supply channel such that a vertical level of a water-surface in the cultivation medium receiving space is lower than a vertical level of the nutrient feeder for preventing inflow of water into the nutrient feeder.

10. The apparatus of claim 9, wherein the water supply is configured to supply water to the cultivator selectively through one of the first water supply channel and the second water supply channel,
wherein in the general mode, the controller is configured to control the water supply to block the second water supply channel and to supply water to the cultivation medium receiving space through the first water supply channel.

11. The apparatus of claim 9 or 10, wherein in an additional water supply mode, the controller is configured to control the water supply to supply water to the cultivation medium receiving space through the first water supply channel such that a vertical level of the water-surface in the cultivation medium receiving space is higher than or equal to the vertical level of the feeding hole such that the nutrient of the nutrient feeder is mixed with the water to produce the mixed solution to be fed to the medium.

12. The apparatus of claim 9, wherein in an upper water supply mode, the controller is configured to control the water supply to block the first water supply channel and to supply water to the cover channel through the second water supply channel such that water is supplied from the cover channel to the nutrient feeder, and thus a mixture of water and the nutrient from the nutrient feeder is supplied to the cultivation medium.

## Patentansprüche

1. Pflanzenkultivierungsvorrichtung, umfassend:
einen Schrank (10);
ein im Schrank angeordnetes Bett (50);
einen Kultivator (60), der auf dem Bett sitzt, wobei der Kultivator dazu bestimmt ist, ein Kultivierungsmedium aufzunehmen, in dem mindestens ein Teil einer Pflanze aufgenommen wird; und
eine Wasserversorgung (40), die an dem Schrank angeordnet ist und dazu eingerichtet ist, den Kultivator mit Wasser zu versorgen,
wobei der Kultivator umfasst:
ein Kultivierungsgefäß (61), das auf dem Bett sitzt und in dem ein Kultivierungsmedium-Aufnahmeraum (S2) definiert ist, um das Kultivierungsmedium aufzunehmen; wobei das Kultivierungsgefäß (61) eine offene Oberseite aufweist, so dass der Kultivierungsmedium-Aufnahmeraum durch die offene Oberseite nach außen hin freiliegt;
eine Nährstoffzufuhr (67), die sich im Kultivierungsmedium-Aufnahmeraum befindet, wobei die Nährstoffzufuhr so ausgelegt ist, dass sie einen Nährstoff für die Pflanze enthält; und
eine Abdeckung (62), die auf der offenen Oberseite des Kultivierungsgefäßes angeordnet ist, um den Kultivierungsmedium-Aufnahmeraum zu schließen;
wobei das Kultivierungsgefäß so eingerichtet ist, dass von der Wasserversorgung zugeführtes Wasser in den Kultivierungsmedium-Aufnahmeraum fließt und dem darin befindlichen Kultivierungsmedium zugeführt wird,
wobei die Nährstoffzufuhr von einer Bodenfläche (611) des Kulturgefäßes beabstandet ist,
wobei der Nährstoff der Nährstoffzuführung mit dem Wasser gemischt wird, das mit der Nährstoffzuführung innerhalb des Kultivierungsmedium-Aufnahmeraum in Kontakt ist, und dem Kultivierungsmedium mit dem Wasser zugeführt wird,
**dadurch gekennzeichnet, dass** der Kultivator einen Abdeckungskanal (65) umfasst, der in einer oberen Fläche der Abdeckung definiert ist und dazu eingerichtet ist, von der Wasserversorgung zugeführtes Wasser aufzunehmen,
wobei der Abdeckkanal ein erstes Loch aufweist, das mit dem Inneren der Nährstoffzuführung in Verbindung steht, wobei der Nährstoffzuführung durch die erste Einströmöffnung Wasser zugeführt wird.

2. Vorrichtung nach Anspruch 1, wobei die Wasserversorgung einen ersten Wasserversorgungskanal umfasst, der sich in Richtung des Bettes erstreckt und so konfiguriert ist, dass er Wasser abgibt,
wobei das Kultivierungsgefäß eine erste Verbindungsöffnung aufweist, durch die das aus dem ersten Wasserzufuhrkanal abgegebene Wasser in den Aufnahmeraum für das Kultivierungsmedium fließt.

3. Vorrichtung nach Anspruch 1 oder 2, wobei die Nährstoffzuführung eine Nährstoffzuführungsöffnung aufweist, um das Innere der Nährstoffzuführung, in der der Nährstoff aufbewahrt wird, mit dem Aufnahmeraum für das Nährmedium zu verbinden
wobei das Wasser im Aufnahmeraum für das Kulturmedium durch die Nährstoffzuführungsöffnung in das Innere der Nährstoffzufuhr fließt und mit dem Nährstoff vermischt wird.

4. Vorrichtung nach Anspruch 1, wobei der Abdeckungskanal durch einen vertieften Abschnitt der Oberseite der Abdeckung definiert ist,
wobei die Abdeckung einen Aufnahmeteil für das Kultivierungsmedium umfasst, der so gestaltet ist, dass er ein oberes Ende des Kultivierungsmediums in dem Kultivierungsmedium-Aufnahmeraum aufnimmt,
wobei der das Kultivierungsmedium aufnehmende Abschnitt in dem Abdeckungskanal angeordnet ist und von einer Bodenfläche des Abdeckungskanals nach oben ragt.

5. Vorrichtung nach Anspruch 4, wobei die erste Einströmöffnung so definiert ist, dass sie mit der Bodenfläche des Abdeckkanals in Kontakt steht.

6. Vorrichtung nach Anspruch 4 oder 5, wobei die Nährstoffzuführung an der Abdeckung angeordnet ist und von dem das Kultivierungsmedium aufnehmenden Abschnitt beabstandet ist, wobei die erste Einströmöffnung an einem Umfang der Nährstoffzuführung angeordnet ist.

7. Vorrichtung nach Anspruch 6, wobei die Nährstoffzufuhr eine Nährstoffzuführungsöffnung aufweist, die mit dem Aufnahmeraum für das Kulturmedium in Verbindung steht,
wobei die Nährstoffzufuhr eine Seitenfläche, die sich von der Abdeckung in Richtung der Bodenfläche des Kultivierungsgefäßes erstreckt, und einen Bodenabschnitt aufweist, der mit der Seitenfläche verbunden ist, wobei das Nährstoffzuführungsöffnung in dem Bodenabschnitt definiert ist,
wobei die erste Einströmöffnung die Seitenfläche durchdringt und mit dem Inneren der Nährstoffzufuhr in Verbindung steht.

8. Vorrichtung nach Anspruch 7, wobei die Wasserversorgung ferner einen zweiten Wasserversorgungskanal umfasst, der zumindest teilweise oberhalb des Abdeckungskanals angeordnet ist, um dem Abdeckungskanal Wasser zuzuführen,
wobei das vom zweiten Wasserzufuhrkanal zum Abdeckungskanal zugeführte Wasser durch die erste Einströmöffnung in die Nährstoffzufuhr fließt.

9. Vorrichtung nach Anspruch 8, ferner umfassend: eine Steuerung, die in dem Gehäuse angeordnet und dazu eingerichtet ist, die Wasserversorgung zu steuern,
wobei in einem allgemeinen Modus die Steuerung dazu eingerichtet ist, die Wasserversorgung so zu steuern, dass Wasser durch den ersten Wasserversorgungskanal in den Kultivierungsmedium-Aufnahmeraum zugeführt wird, so dass ein vertikales Niveau einer Wasseroberfläche in dem Kultivierungsmedium-Aufnahmeraum niedriger ist als ein vertikales Niveau der Nährstoffzufuhr, um ein Einströmen von Wasser in die Nährstoffzufuhr zu verhindern.

10. Vorrichtung nach Anspruch 9, wobei die Wasserversorgung so konfiguriert ist, dass sie dem Kultivator wahlweise durch den ersten Wasserzufuhrkanal oder den zweiten Wasserzufuhrkanal Wasser zuführt,
wobei in der allgemeinen Betriebsart die Steuerung eingerichtet ist, die Wasserzufuhr so zu steuern, dass der zweite Wasserzufuhrkanal blockiert wird und Wasser durch den ersten Wasserzufuhrkanal in den Kultivierungsmedium-Aufnahmeraum geleitet wird.

11. Vorrichtung nach Anspruch 9 oder 10, wobei in einem zusätzlichen Wasserversorgungsmodus die Steuerung dazu eingerichtet ist, die Wasserversorgung so zu steuern, dass dem Kultivierungsmedium-Aufnahmeraum durch den ersten Wasserversorgungskanal Wasser zugeführt wird, so dass ein vertikales Niveau der Wasseroberfläche in dem Kultivierungsmedium-Aufnahmeraum höher oder gleich dem vertikalen Niveau der Zuführungsöffnung ist, so dass der Nährstoff der Nährstoffzuführung mit dem Wasser gemischt wird, um die gemischte Lösung zu erzeugen, die dem Medium zugeführt wird.

12. Vorrichtung nach Anspruch 9, wobei in einem oberen Wasserversorgungsmodus die Steuerung dazu eingerichtet ist, die Wasserversorgung so zu steuern, dass der erste Wasserversorgungskanal blockiert wird und dem Abdeckungskanal durch den zweiten Wasserversorgungskanal Wasser zugeführt wird, so dass Wasser aus dem Abdeckungskanal der Nährstoffzufuhr zugeführt wird und somit eine Mischung aus Wasser und dem Nährstoff aus der Nährstoffzufuhr dem Kulturmedium zugeführt wird.

## Revendications

1. Appareil de culture de plantes comprenant:
une armoire (10);
un lit (50) disposé à l'intérieur de l'armoire (1);
un cultivateur (60) placé sur le lit, le cultivateur étant conçu pour recevoir un milieu de culture dans lequel au moins une partie d'une plante est logée; et
une alimentation en eau (40) disposée dans l'armoire et conçue pour alimenter en eau le cultivateur,
dans lequel le cultivateur comprend:
un récipient de culture (61) placé sur le lit et comportant un espace de réception de milieu de culture (S2) pour recevoir le milieu de culture; le récipient de culture (61) a une partie supérieure ouverte de sorte que l'espace de réception de milieu de culture est apparent de l'extérieur à travers la partie supérieure ouverte;
un distributeur de nutriments (67) situé dans l'espace de réception de milieu de culture, le distributeur de nutriments étant conçu pour contenir un nutriment pour la plante; et
un couvercle (62) disposé sur la partie supérieure ouverte du récipient de culture pour fermer l'espace de réception de milieu de culture;
dans lequel le récipient de culture est conçu de manière à ce que l'eau fournie par l'alimentation en eau s'écoule dans l'espace de réception de milieu de culture et alimente le milieu de culture qui s'y trouve,
dans lequel le distributeur de nutriments est espacé d'une surface inférieure (611) du récipient de culture,
dans lequel le nutriment du distributeur d'éléments nutritifs est mélangé à l'eau en contact avec le distributeur de nutriments à l'intérieur de l'espace de réception de milieu de culture et acheminé au milieu de culture avec l'eau, **caractérisé en ce que** le cultivateur comprend un canal de couvercle (65) défini dans une face supérieure du couvercle et conçu pour recevoir l'eau fournie par l'alimentation en eau,
dans lequel le canal de couvercle comporte un premier trou communiquant avec l'intérieur du distributeur de nutriments, l'eau étant acheminée vers le distributeur de nutriments par le premier trou d'entrée.

2. Appareil selon la revendication 1, dans lequel l'alimentation en eau comprend un premier canal d'alimentation en eau s'étendant vers le lit et conçu pour évacuer l'eau,
dans lequel le récipient de culture comprend un premier trou de communication par lequel l'eau évacuée du premier canal d'alimentation en eau s'écoule dans l'espace de réception de milieu de culture.

3. Appareil selon la revendication 1 ou 2, dans lequel le distributeur de nutriments comprend un trou d'alimentation en nutriments pour relier l'intérieur du distributeur de nutriments stockant les nutriments à l'espace de réception de milieu de culture,
dans lequel l'eau contenue dans l'espace de réception de milieu de culture s'écoule à l'intérieur du distributeur de nutriments par le trou d'alimentation en nutriments et est mélangée aux nutriments.

4. Appareil selon la revendication 1, dans lequel le canal de couvercle est défini par une partie en retrait de la face supérieure du couvercle,
dans lequel le couvercle comprend une partie de réception de milieu de culture conçue pour recevoir une extrémité supérieure du milieu de culture dans l'espace de réception de milieu de culture,
dans lequel la partie de réception de milieu de culture est disposée dans le canal de couvercle et fait saillie vers le haut d'une surface inférieure du canal de couvercle.

5. Appareil selon la revendication 4, dans lequel le premier trou d'entrée est défini de manière à être en contact avec la surface inférieure du canal de couvercle.

6. Appareil selon la revendication 4 ou 5, dans lequel le distributeur de nutriments est disposé sur le couvercle et est espacé de la partie de réception de milieu de culture, le premier trou d'entrée étant ménagé à la périphérie du distributeur de nutriments.

7. Appareil selon la revendication 6, dans lequel le distributeur de nutriments comporte un trou d'alimentation en nutriments en communication avec l'espace de réception de milieu de culture,
dans lequel le distributeur de nutriments présente une face latérale partant du couvercle vers la surface inférieure du récipient de culture, et une partie inférieure reliée à la face latérale, le trou d'alimentation en nutriments étant défini dans la partie inférieure,
dans lequel le premier trou d'entrée pénètre dans la face latérale et communique avec l'intérieur du distributeur de nutriments.

8. Appareil selon la revendication 7, dans lequel l'alimentation en eau comprend en outre un second canal d'alimentation en eau situé au moins en partie au-dessus du canal de couvercle pour alimenter le canal de couvercle en eau,
dans lequel l'eau acheminée par le second canal d'alimentation en eau au canal de couvercle s'écoule à travers le premier trou d'entrée et dans le distributeur de nutriments.

9. Appareil selon la revendication 8, comprenant en outre un dispositif de commande disposé dans l'armoire et conçu pour régler l'alimentation en eau,
dans lequel, dans un mode général, le dispositif de commande est conçu pour commander l'alimentation en eau afin d'aliment en eau l'espace de réception de milieu de culture par le premier canal d'alimentation en eau de sorte qu'un niveau vertical d'une surface d'eau dans l'espace de réception de milieu de culture soit inférieur à un niveau vertical du distributeur de nutriments afin d'empêcher l'entrée d'eau dans le distributeur de nutriments.

10. Appareil selon la revendication 9, dans lequel l'alimentation en eau est conçue pour alimenter en eau le cultivateur sélectivement par le biais de l'un parmi le premier canal d'alimentation en eau et le second canal d'alimentation en eau,
dans lequel, en mode général, le dispositif de commande est conçu pour régler l'alimentation en eau afin de bloquer le second canal d'alimentation en eau et d'alimenter en eau l'espace de réception de milieu de culture par le biais du premier canal d'alimentation en eau.

11. Appareil selon la revendication 9 ou 10, dans lequel dans un mode d'alimentation en eau supplémentaire, le dispositif de commande est conçu pour régler l'alimentation en eau afin d'alimenter en eau l'espace de réception de milieu de culture par le biais du premier canal d'alimentation en eau de sorte qu'un niveau vertical de la surface de l'eau dans l'espace de réception de milieu de culture soit supérieur ou égal au niveau vertical du trou d'alimentation de sorte que le nutriment du distributeur de nutriments soit mélangé à l'eau pour produire la solution mélangée à procurer au milieu de culture.

12. Appareil selon la revendication 9, dans lequel dans un mode d'alimentation en eau supérieure, le dispositif de commande est conçu pour commander l'alimentation en eau afin de bloquer le premier canal d'alimentation en eau et d'alimenter en eau le canal de couvercle par le biais du second canal d'alimentation en eau de manière à ce que l'eau soit acheminée du canal de couvercle au distributeur de nutriments et qu'un mélange d'eau et de nutriments provenant du distributeur de nutriments soit ainsi acheminé vers le milieu de culture.
